# EUROPEAN PATENT APPLICATION

(11) **EP 1 133 070 A2**
(43) Date of publication of application: **12.09.2001**
(21) Application number: 01104888.1
(22) Date of filing: 28.02.2001
(51) Int. Cl.: H04B 7/005

(54) **Transmit power control method and apparatus in a radio communication system**

(30) Priority: 02.03.2000 JP 2000057195
(71) Applicant: MATSUSHITA ELECTRIC INDUSTRIAL CO., LTD., Kadoma-shi, Osaka 571-8501 (JP)
(72) Inventor: Goto, Masahiko, Yokosuka-shi, Kanagawa 239-0847 (JP)
(74) Representative: Grünecker, Kinkeldey, Stockmair & Schwanhäusser Anwaltssozietät

(57) **Abstract**

When the SIR of the received signal is larger than the SIR upper limit, threshold determining section 105 outputs an instruction for decreasing the transmit power to control bit generating section 106. Further, when the SIR is smaller than the SIR lower limit, threshold determining section 105 outputs an instruction for increasing the transmit power to control bit generating section 106. When the SIR of the received signal is equal to or smaller than the SIR upper limit and equal to or larger than the SIR lower limit, threshold determining section 105 outputs the determined result to control bit generating section 106. When the SIR of the received signal is equal to or smaller than the SIR upper limit and equal to or larger than the SIR lower limit, control bit generating section 106 refers to a last instruction on the transmit power control stored in storage section 107, and outputs an instruction opposite to the last instruction with respect to an increase or decrease in the transmit power to storage section 107 and multiplexing section 108.

## Description

### BACKGROUND OF THE INVENTION

### Field of the Invention

The present invention relates to a communication apparatus and transmit power control method, and more particularly, to a communication apparatus and transmit power control method used in a radio communication using a CDMA system as a radio access system.

### Description of the Related Art

Recently, in a CDMA radio communication system, a case sometimes occurs that a plurality of control channels and user channels exists together in the same carrier frequency. Therefore, the existence of a channel on which signals are transmitted with the transmit power more than a required level causes the interference with other users, and thereby degrades the reception performance in the other users. Accordingly, it is necessary to suppress the transmit power to an extent enabling a predetermined received quality to be maintained.

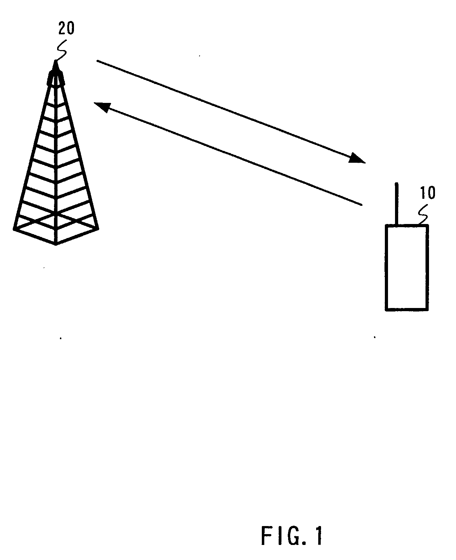

A conventional transmit power control is herein explained. FIG.1 is a diagram illustrating a communication aspect of a base station apparatus and communication terminal apparatus.

Communication terminal apparatus 10 measures SIR (Signal to Interference Ratio) of a signal transmitted from base station apparatus 20. Then, communication terminal apparatus 10 compares the measured SIR with a required SIR value, and instructs base station apparatus 20 to increase or decrease the transmit power.

According to the instruction transmitted from communication terminal apparatus 10, base station apparatus 20 changes the transmit power of a signal to be transmitted to communication terminal apparatus 10.

However, as described in a variable rate CDMA transmit power control method disclosed in Japanese Laid Open Patent Publication HEI11-17646, in a conventional configuration, a transmit power control error sometimes occurs due to a time delay between the time the transmit power control information is determined and the time the transmit power is actually updated according to the transmit power control information.

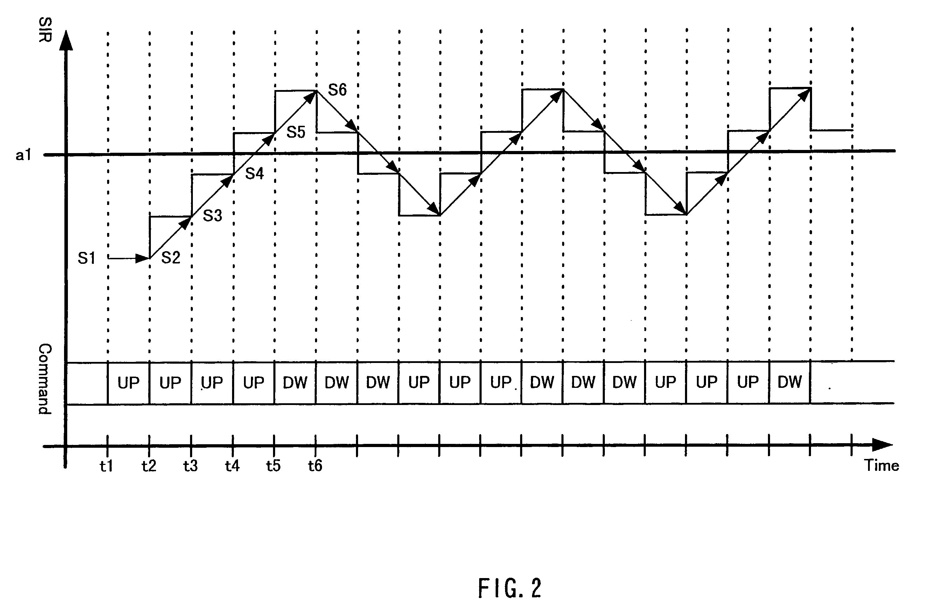

An example of the above transmit power control will be described below. FIG.2 is a view showing an example of the conventional transmit power control.

In FIG.2, the abscissa is indicative of time, the ordinate is indicative of SIR, and instructions for communication terminal apparatus 10 to transmit to base station apparatus 20 are indicated at a lower portion in the figure. In FIG.2, the instruction "UP" is an instruction for increasing the transmit power of base station apparatus 20, while the instruction "DW" is another instruction for decreasing the transmit power of base station apparatus 20.

S1 is indicative of SIR of a signal received by communication terminal apparatus 10 at time t1. Since S1 has a value lower than a required SIR value a1, communication terminal apparatus 10 transmits the instruction "UP" to base station apparatus 20.

S2 is indicative of SIR of a signal received by communication terminal apparatus 10 at time t2. Since S2 has a value lower than the required SIR value a1, communication terminal apparatus 10 transmits the instruction "UP" to base station apparatus 20. Base station apparatus 20 receives at time t2 the instruction "UP" transmitted from communication terminal apparatus 10 at time t1, and increases the transmit power to transmit a signal to communication terminal apparatus 10.

S3 is indicative of SIR of a signal received by communication terminal apparatus 10 at time t3. Since S3 has a value lower than the required SIR value a1, communication terminal apparatus 10 transmits the instruction "UP" to base station apparatus 20. Base station apparatus 20 receives at time t3 the instruction "UP" transmitted from communication terminal apparatus 10 at time t2, and increases the transmit power to transmit a signal to communication terminal apparatus 10.

S4 is indicative of SIR of a signal received by communication terminal apparatus 10 at time t4. Since S4 has a value lower than the required SIR value a1, communication terminal apparatus 10 transmits the instruction "UP" to base station apparatus 20. Base station apparatus 20 receives at time t4 the instruction "UP" transmitted from communication terminal apparatus 10 at time t3, and increases the transmit power to transmit a signal to communication terminal apparatus 10.

S5 is indicative of SIR of a signal received by communication terminal apparatus 10 at time t5. Since S5 has a value higher than the required SIR value a1, communication terminal apparatus 10 transmits the instruction "DW" to base station apparatus 20. Base station apparatus 20 receives at time t5 the instruction "UP" transmitted from communication terminal apparatus 10 at time t4, and increases the transmit power to transmit a signal to communication terminal apparatus 10.

S6 is indicative of SIR of a signal received by communication terminal apparatus 10 at time t6. Since S6 has a value higher than the required SIR value a1, communication terminal apparatus 10 transmits the instruction "DW" to base station apparatus 20. Base station apparatus 20 receives at time t6 the instruction "DW" transmitted from communication terminal apparatus 10 at time t5, and decreases the transmit power to transmit a signal to communication terminal apparatus 10.

Thus, in communications between communication terminal apparatus 10 and base station apparatus 20, the transmit power control error occurs due to a time delay between the time the transmit power control information is determined and the time the transmit power is actually updated according to the transmit power control information.

In the case where the transmit power control information is bit information for instructing an increase or decrease amount in the transmit power, even when the propagation environment of radio signals is static, a time difference arises until the transmit power control information is reflected in a transmit power level, due to a propagation delay of a control signal, and therefore the transmit power level changes more than the increase or decrease amount in the transmit power, and consequently varies widely from the required level. As a result, the SIR value of a signal received by the communication terminal apparatus also varies widely from the required SIR value. In particular, as the delay in the control time is increased, the variation amount in the SIR of the received signal is increased.

Further, the transmit power control error also occurs under the environment of fading. As a result of the above transmit power variation, the received quality in the communication terminal apparatus deteriorates when the transmit power is controlled below the required power level, while the received qualities in other users may deteriorate when the transmit power is controlled above the required power level.

### SUMMARY OF THE INVENTION

It is an object of the present invention to provide a communication apparatus and transmit power control method that reduce a variation more than an increase or decrease amount in the transmit power in the vicinity of a required level of the transmit power.

In the closed-loop transmit power control, there occurs a delay between transmitting an instruction on the transmit power control obtained from a received signal quality to a communication partner and reflecting the instruction in the transmit power of the communication partner. Therefore, the present invention achieves the above object by providing a required received quality, which is a criterion for the transmit power control, with a range allowing a transmit power level varying during such a delay to judge, and thereby performing the transmit power control.

Specifically, the present invention achieves the above object by when the received quality of a received signal is in the range of the required received quality, referring to previous instructions on the transmit power control, instructing the transmit power so that the instructions on the transmit power do not lean in either direction, and thereby reducing the variation in the transmit power due to the propagation delay of a control signal.

More specifically, the present invention achieves the above object by in the closed-loop transmit power control method, setting a required range from the required level of the received quality, instructing a change opposite to a previously instructed change with respect to the increase or decrease in the transmit power control when the received quality is in the required range, and thereby reducing the variation in the transmit power due to the propagation delay of the control signal.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a diagram illustrating a communication aspect of a base station apparatus and a communication terminal apparatus;
FIG.2 is a view showing an example of conventional transmit power control;
FIG.3 is a block diagram illustrating an example of configurations of a communication terminal apparatus and a base station apparatus according to a first embodiment of the present invention;
FIG.4 is a view showing an example of transmit power control between the communication terminal apparatus and base station apparatus according to the first embodiment of the present invention;
FIG.5 is a block diagram illustrating another example of configurations of the communication terminal apparatus and the base station apparatus according to the first embodiment of the present invention;
FIG.6 is a block diagram illustrating another example of configurations of the communication terminal apparatus and the base station apparatus according to the first embodiment of the present invention; and
FIG.7 is a block diagram illustrating an example of configurations of a communication terminal apparatus and a base station apparatus according to a second embodiment of the present invention.

### DETAILED DESCRIPTION OF THE PREFERRED EMBODIMENTS

Embodiments of the present invention will be described below with reference to accompanying drawings.

### (First embodiment)

The first embodiment of present invention explains a case that in the closed-loop transmit power control, the transmit power control is performed by considering a delay occurring during a period while an instruction on transmit power control obtained from a received signal quality is transmitted to a communication partner and then the instruction is reflected in the transmit power of the communication partner, and providing a required received quality, which is a criterion for the transmit power control, with a range allowing a transmit power level varying during such a delay to judge.

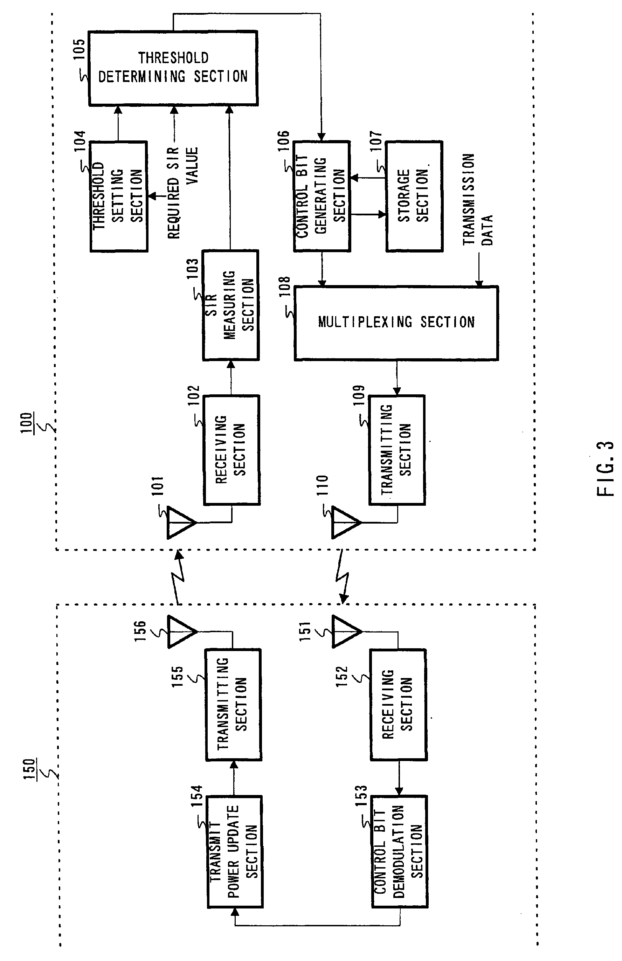

FIG.3 is a block diagram illustrating an example of configurations of a communication terminal apparatus and a base station apparatus according to the first embodiment of the present invention.

Communication terminal apparatus 100 is mainly comprised of antenna 101, receiving section 102, SIR measuring section 103, threshold setting section 104, threshold determining section 105, control bit generating section 106, storage section 107, multiplexing section 108, transmitting section 109 and antenna 110.

Further, base station apparatus 150 is mainly comprised of antenna 151, receiving section 152, control bit demodulation section 153, transmit power update section 154, transmitting section 155, and antenna 156.

Generally, a delay occurs during a period while communication terminal apparatus 100 transmits an instruction on the transmit power control to base station apparatus 150 and then base station apparatus 150 transmits a signal with the transmit power with the instruction reflected therein to communication terminal apparatus 100, and therefore the received quality changes by an amount corresponding to the time delay in this loop.

Hence, the required received quality is provided with a range in advance, and when a received quality is in the range, communication terminal apparatus 100 refers to a previous instruction on the transmit power control, and with respect to an instruction on an increase or decrease in the transmit power, transmits an instruction opposite to the previous instruction to base station apparatus 150.

Antenna 101 receives a radio signal transmitted from base station apparatus 150 to output to receiving section 102. Receiving section 102 converts the received radio signal into a signal with a baseband frequency to demodulate, and outputs the demodulated signal to SIR measuring section 103.

SIR measuring section 103 measures SIR (Signal to Interference Ratio) of the demodulated signal to output to threshold determining section 105.

Threshold setting section 104 calculates an SIR upper limit obtained by adding a predetermined amount to the required SIR value and an SIR lower limit obtained by subtracting a predetermined value from the required SIR value to output to threshold determining section 105.

When the SIR of the received signal is larger than the SIR upper limit, threshold determining section 105 outputs an instruction for decreasing the transmit power to control bit generating section 106. Further, when the SIR is smaller than the SIR lower limit, threshold determining section 105 outputs an instruction for increasing the transmit power to control bit generating section 106.

Furthermore, when the SIR of the received signal is equal to or smaller than the SIR upper limit and equal to or larger than the SIR lower limit, threshold determining section 105 outputs the determined result to control bit generating section 106.

According to the determined result in threshold determining section 105, control bit generating section 106 generates a TPC (Transmit Power Control) bit for instructing the transmit power control for a communication partner to output to multiplexing section 108.

When the SIR of the received signal is equal to or smaller than the SIR upper limit and equal to or larger than the SIR lower limit, control bit generating section 106 refers to a last instruction on the transmit power control stored in storage section 107, and outputs an instruction opposite to the last instruction with respect to an increase or decrease in the transmit power to storage section 107 and multiplexing section 108.

For example, when an instruction for "decreasing the transmit power by 1dB" is last output, control bit generating section 106 next outputs an instruction for "increasing the transmit power by 1dB" to storage section 107 and multiplexing section 108. Meanwhile, when an instruction for "increasing the transmit power by 1dB" is last output, control bit generating section 106 next outputs an instruction for "decreasing the transmit power by 1dB" to storage section 107 and multiplexing section 108.

Further, when the SIR value is larger than the SIR upper limit, control bit generating section 106 generates a TPC bit indicative of an instruction for decreasing the transmit power to output to storage section 107 and multiplexing section 108. Meanwhile, when the SIR value is smaller than the SIR lower limit, control bit generating section 106 generates a TPC bit indicative of an instruction for increasing the transmit power to output to storage section 107 and multiplexing section 108.

Storage section 107 stores the instructions on the transmit power control generated in control bit generating section 106.

Multiplexing section 108 multiplexes transmission data and the TPC bit to output to transmitting section 109. Transmitting section 109 modulates the multiplexed transmission data and TPC bit, converts the resultant signal into a radio signal, and transmits the radio signal through antenna 110.

Receiving section 152 receives through antenna 151 the radio signal transmitted from communication terminal apparatus 100, and converts the radio signal into a baseband signal to output to control bit demodulation section 153. Control bit demodulation section 153 extracts a transmit power control bit from the received signal to output to transmit power update section 154. Transmit power update section 154 changes the transmit power according to the information contained in the transmit power control bit.

Thus, communication terminal apparatus 100 measures the SIR of a signal transmitted from base station apparatus 150 to judge the transmit power control, and transmits an instruction on the transmit power control to base station apparatus 150. Then, according to the instruction on the transmit power control transmitted from communication terminal apparatus 100, base station apparatus 150 changes the transmit power.

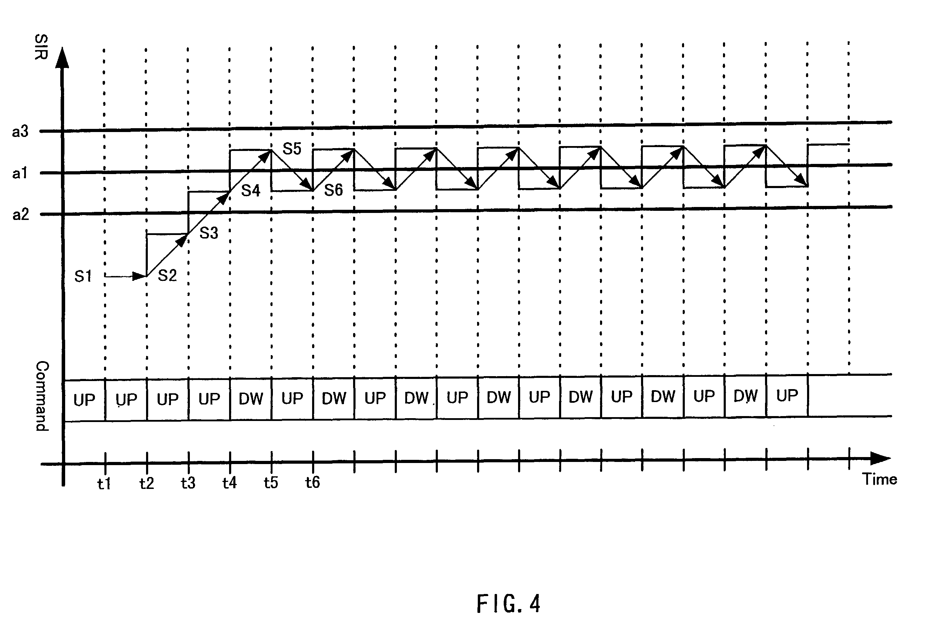

The operation on the transmit power control will be explained next. FIG.4 is a diagram illustrating an example of the transmit power control between the communication terminal apparatus and base station apparatus according to the first embodiment of the present invention.

In FIG.4, the abscissa is indicative of time, the ordinate is indicative of SIR, and instructions for communication terminal apparatus 100 to transmit to base station apparatus 150 are indicated at a lower portion in the figure. In FIG.4, the instruction "UP" is an instruction for increasing the transmit power of base station apparatus 150, while the instruction "DW" is another instruction for decreasing the transmit power of base station apparatus 150.

Communication terminal apparatus 100 sets a required SIR value a1, an SIR lower limit a2, and an SIR upper limit a3.

Changes in SIR of received signals and instructions on the transmit power control will be explained below with respect to time t1 to t6 in this order.

S1 is indicative of SIR of a signal received by communication terminal apparatus 100 at time t1. Since S1 has a value lower than the SIR lower limit a2, communication terminal apparatus 100 transmits the instruction "UP" at time t1.

S2 is indicative of SIR of a signal received by communication terminal apparatus 100 at time t2. Since S2 has a value lower than the SIR lower limit a2, communication terminal apparatus 100 transmits the instruction "UP" at time t2. Base station apparatus 150 receives at time t2 the instruction "UP" transmitted from communication terminal apparatus 100 at time t1, and increases the transmit power to transmit a signal to communication terminal apparatus 100.

S3 is indicative of SIR of a signal received by communication terminal apparatus 100 at time t3. Since S3 has a value lower than the SIR lower limit a2, communication terminal apparatus 100 transmits the instruction "UP" at time t3. Base station apparatus 150 receives at time t3 the instruction "UP" transmitted from communication terminal apparatus at time t2, and increases the transmit power to transmit a signal to communication terminal apparatus 100.

S4 is indicative of SIR of a signal received by communication terminal apparatus 100 at time t4. Since S4 has a value equal to or higher than the SIR lower limit a2 and equal to or lower than the SIR upper limit a3, communication terminal apparatus 100 refers to the last transmitted instruction, in other words, the instruction "UP" transmitted at time t3, and transmits the instruction "DW" opposite to the instruction "UP" at time t4.

Base station apparatus 150 receives at time t4 the instruction "UP" transmitted from communication terminal apparatus at time t3, and increases the transmit power to transmit a signal to communication terminal apparatus 100.

S5 is indicative of SIR of a signal received by communication terminal apparatus 100 at time t5. Since S5 has a value equal to or higher than the SIR lower limit a2 and equal to or lower than the upper limit a3, communication terminal apparatus 100 refers to the last transmitted instruction, in other words, the instruction "DW" transmitted at time t4, and transmits the instruction "UP" opposite to the instruction "DW" at time t5.

Base station apparatus 150 receives at time t5 the instruction "DW" transmitted from communication terminal apparatus 100 at time t4, and decreases the transmit power to transmit a signal to communication terminal apparatus 100.

S6 is indicative of SIR of a signal received by communication terminal apparatus 100 at time t6. Since S6 has a value equal to or higher than the SIR lower limit a2 and equal to or lower than the upper limit a3, communication terminal apparatus 100 refers to the last transmitted instruction, in other words, the instruction "UP" transmitted at time t5, and transmits the instruction "DW" opposite to the instruction "UP" to base station apparatus 150.

Base station apparatus 150 receives at time t6 the instruction "UP" transmitted from communication terminal apparatus 100 at time t5, and increases the transmit power to transmit a signal to communication terminal apparatus 100.

Thus, according to the communication terminal apparatus and base station apparatus of the first embodiment of the present invention, in the closed-loop transmit power control, it is possible to reduce the variation more than an increase or decrease amount in the transmit power in the vicinity of the required level of the transmit power, by setting a required range from the required level of the received quality, and when the received quality is in the required range, instructing a change opposite to a previously instructed change with respect to the increase or decrease in the transmit power control.

In addition, it is preferable that the required range of the received quality is more than or equal to a sum of a transmit power change amount multiplied by a delay time and a transmit power change amount at one time. That is, the required range of the received quality is only required to be more than a amount changing in the transmit power during a delay between transmitting a transmit power control instruction and reflecting the instruction.

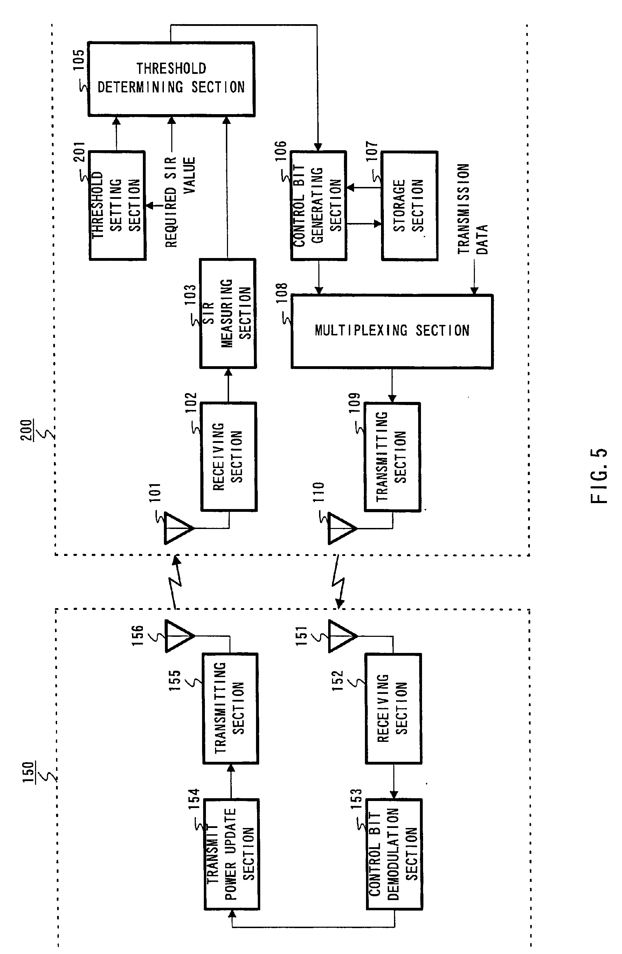

Further, the communication terminal apparatus of this embodiment is capable of changing the threshold into an arbitrary value at an arbitrary timing. FIG.5 is a block diagram illustrating another example of configurations of the communication terminal apparatus and the base station apparatus in the first embodiment of the present invention. In addition, sections common to those in FIG.3 are assigned the same reference numerals as in FIG.3, and the detailed explanation is omitted.

Communication terminal apparatus 200 in FIG.5 is different from the communication terminal apparatus in FIG.3 in a point that the apparatus 200 is provided with threshold setting section 201 to change a threshold into an arbitrary value at an arbitrary timing.

In FIG.5, threshold setting section 201 outputs an instruction for changing a threshold into an arbitrary value at an arbitrary timing to threshold determining section 105. For example, when the signal delay is large and the delay between transmitting a transmit power instruction and reflecting the instruction is increased, threshold setting section 201 outputs an instruction for increasing the SIR upper limit and another instruction for decreasing the SIR lower limit to threshold determining section 105.

Further, when the signal delay is small and the delay between transmitting a transmit power instruction and reflecting the instruction is decreased, threshold setting section 201 outputs an instruction for decreasing the SIR upper limit and another instruction for increasing the SIR lower limit to threshold determining section 105.

According to the instructions output from threshold setting section 201, threshold determining section 105 changes the SIR upper limit and SIR lower limit to compare with the SIR of a received signal.

Thus, communication terminal apparatus 200 of this embodiment changes the SIR upper limit and SIR lower limit corresponding to a delay in the propagation path, and thereby makes a range from the SIR upper limit to the SIR lower limit more than a change amount in the transmit power control due to the propagation delay. As a result, when the SIR value is in the vicinity of the required SIR value, it is possible to prevent the transmit power from being changed more than a change in the transmit power during a period from the time the received quality is compared to the time the instruction on the transmit power is reflected.

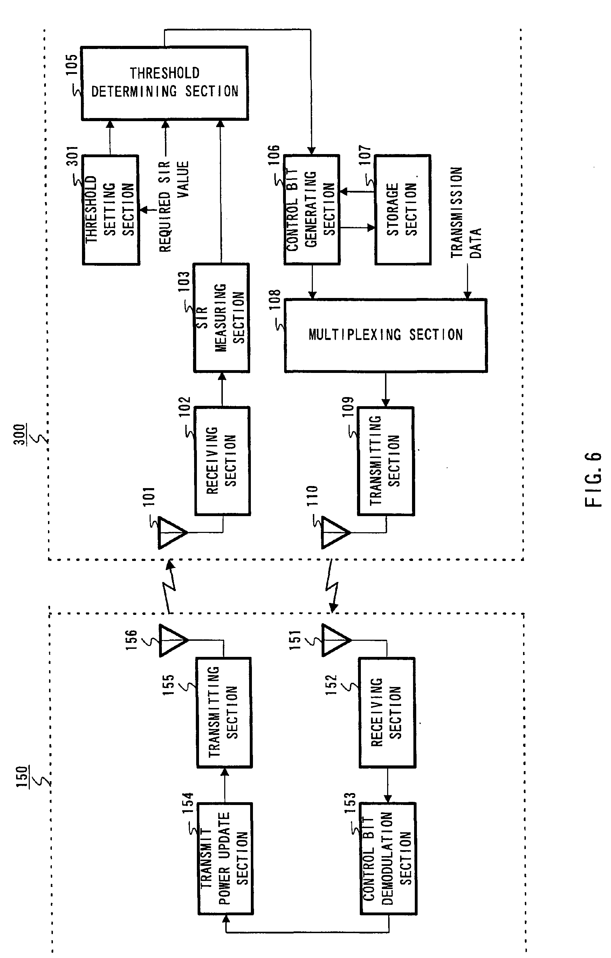

Further, the communication terminal apparatus of this embodiment is capable of changing the SIR upper limit and SIR lower limit according to a change of the required SIR value. FIG.6 is a block diagram illustrating another example of configurations of the communication terminal apparatus and the base station apparatus in the first embodiment of the present invention. In addition, sections common to those in FIG.3 are assigned the same reference numerals as in FIG.3, and the detailed explanation is omitted.

Communication terminal apparatus 300 in FIG.6 is different from the communication terminal apparatus in FIG.3 in a point that the apparatus 300 is provided with threshold setting section 301 to change the SIR upper limit and SIR lower limit according to a change of the required SIR value.

In FIG.6, when the required SIR value is changed, threshold setting section 301 outputs an instruction for changing the SIR upper limit and the SIR lower limit by the same increase or decrease amount as in changing the required SIR value. According to the instruction output from threshold setting section 301, threshold determining section 105 changes the SIR upper limit and the SIR lower limit to compare with SIR of a received signal.

Further, during a period or a plurality of periods of measuring SIR immediately after changing the required SIR value, the threshold determining section 301 instructs to decrease the transmit power when the measured SIR value is more than or equal to the required SIR value, while instructing to increase the transmit power when the measured SIR value is less than the required SIR value.

Thus, communication terminal apparatus 300 of this embodiment changes the SIR upper limit and the SIR lower limit by the same increase or decrease amount as in changing the required SIR value, whereby the apparatus 300 is capable of reducing a variation more than an increase or decrease amount in the transmit power in the vicinity of the required level of the transmit power even when the required SIR value is changed.

### (Second embodiment)

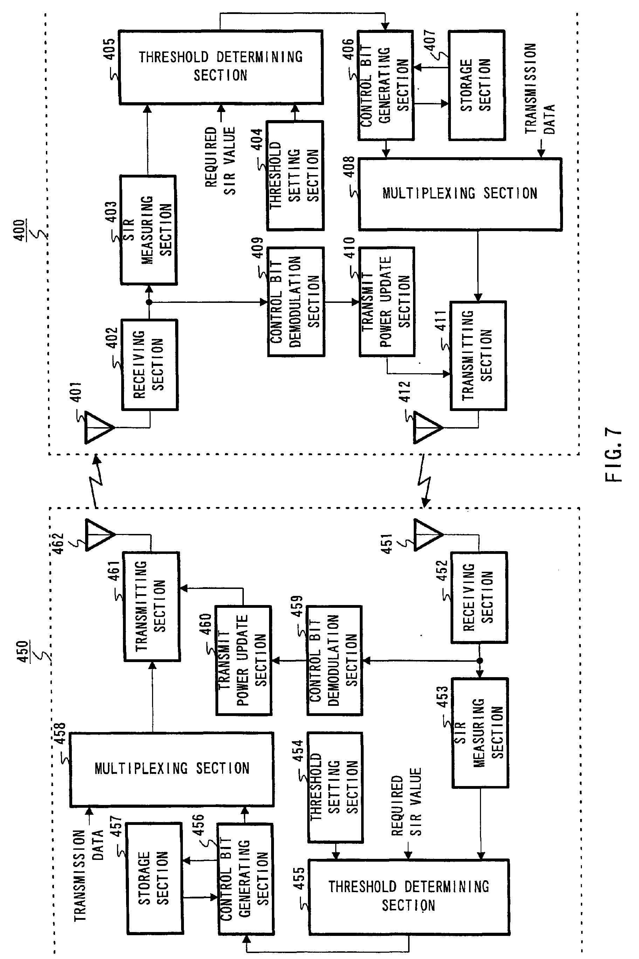

FIG.7 is a block diagram illustrating an example of configurations of a communication terminal apparatus and a base station apparatus according to the second embodiment of the present invention.

In FIG.7, communication terminal apparatus 400 is mainly comprised of antenna 401, receiving section 402, SIR measuring section 403, threshold setting section 404, threshold determining section 405, control bit generating section 406, storage section 407, multiplexing section 408, control bit demodulation section 409, transmit power update section 410, transmitting section 411 and antenna 412.

Further, base station apparatus 450 is mainly comprised of antenna 451, receiving section 452, SIR measuring section 453, threshold setting section 454, threshold determining section 455, control bit generating section 456, storage section 457, multiplexing section 458, control bit demodulation section 459, transmit power update section 460, transmitting section 461, and antenna 462.

Antenna 401 receives a radio signal transmitted from base station apparatus 450 to output to receiving section 402. Receiving section 402 converts the received radio signal into a signal with a baseband frequency to demodulate, and outputs the demodulated signal to SIR measuring section 403 and control bit demodulation section 409.

SIR measuring section 403 measures SIR of the demodulated signal to output to threshold determining section 405. Threshold setting section 404 calculates an SIR upper limit obtained by adding a predetermined amount to the required SIR value and an SIR lower limit obtained by subtracting a predetermined value from the required SIR value to output to threshold determining section 405.

When the SIR of the received signal is larger than the SIR upper limit, threshold determining section 405 outputs an instruction for decreasing the transmit power to control bit generating section 406. Further, when the SIR is smaller than the SIR lower limit, threshold determining section 405 outputs an instruction for increasing the transmit power to control bit generating section 406.

Furthermore, when the SIR of the received signal is equal to or smaller than the SIR upper limit and equal to or larger than the SIR lower limit, threshold determining section 405 outputs the determined result to control bit generating section 406. According to the determined result in threshold determining section 405, control bit generating section 406 generates a TPC bit for instructing the transmit power control for a communication partner to output to multiplexing section 408.

When the SIR of the received signal is equal to or smaller than the SIR upper limit and equal to or larger than the SIR lower limit, control bit generating section 406 refers to a last instruction on the transmit power control stored in storage section 407, and outputs an instruction opposite to the last instruction with respect to an increase or decrease in the transmit power to storage section 407 and multiplexing section 408. The specific operation of control bit generating section 406 is the same as in control bit generating section 106 of the first embodiment.

Further, when the SIR of the received signal is larger than the SIR upper limit, control bit generating section 406 generates a TPC bit indicative of an instruction for decreasing the transmit power to output to storage section 407 and multiplexing section 408. Meanwhile, when the SIR of the received signal is smaller than the SIR lower limit, control bit generating section 406 generates a TPC bit indicative of an instruction for increasing the transmit power to output to storage section 407 and multiplexing section 408.

Storage section 407 stores the instructions on the transmit power control generated in control bit generating section 406. Multiplexing section 408 multiplexes transmission data and the TPC bit to output to transmitting section 411.

Control bit demodulation section 409 extracts a transmit power control bit from the received signal to output to transmit power update section 410. Transmit power update section 410 changes the transmit power according to the information contained in the transmit power control bit. Transmitting section 411 modulates the multiplexed transmission data and TPC bit, converts the resultant signal to a radio signal, and transmits the radio signal through antenna 412.

Antenna 451 receives the radio signal transmitted from communication terminal apparatus 400 to output to receiving section 452. Receiving section 452 converts the received radio signal into a signal with a baseband frequency to demodulate, and outputs the demodulated signal to SIR measuring section 453 and control bit demodulation section 459.

SIR measuring section 453 measures SIR of the demodulated signal to output to threshold determining section 455. Threshold setting section 454 calculates an SIR upper limit obtained by adding a predetermined amount to the required SIR value and an SIR lower limit obtained by subtracting a predetermined value from the required SIR value to output to threshold determining section 455.

When the SIR of the received signal is larger than the SIR lower limit, threshold determining section 455 outputs an instruction for decreasing the transmit power to control bit generating section 456. Further, when the SIR is smaller than the SIR upper limit, threshold determining section 455 outputs an instruction for increasing the transmit power to control bit generating section 456.

Furthermore, when the SIR of the received signal is equal to or smaller than the SIR upper limit and equal to or larger than the SIR lower limit, threshold determining section 455 outputs the determined result to control bit generating section 456. According to the determined result in threshold determining section 455, control bit generating section 456 generates a TPC bit for instructing the transmit power control for a communication partner to output to multiplexing section 458.

When the SIR of the received signal is equal to or smaller than the SIR upper limit and equal to or larger than the SIR lower limit, control bit generating section 456 refers to a last instruction on the transmit power control stored in storage section 457, and outputs an instruction opposite to the last instruction with respect to an increase or decrease in the transmit power to storage section 457 and multiplexing section 458. The specific operation of control bit generating section 456 is the same as in control bit generating section 106 of the first embodiment.

Further, when the SIR is larger than the SIR upper limit, control bit generating section 456 generates a TPC bit indicative of an instruction for decreasing the transmit power to output to storage section 457 and multiplexing section 458. Meanwhile, when the SIR is smaller than the SIR lower limit, control bit generating section 456 generates a TPC bit indicative of an instruction for increasing the transmit power to output to storage section 457 and multiplexing section 458.

Storage section 457 stores the instructions on the transmit power control generated in control bit generating section 456. Multiplexing section 458 multiplexes transmission data and the TPC bit to output to transmitting section 461.

Control bit demodulation section 459 extracts a transmit power control bit from the received signal to output to transmit power update section 460. Transmit power update section 460 changes the transmit power according to the information contained in the transmit power control bit. Transmitting section 461 modulates the multiplexed transmission data and TPC bit, converts the resultant signal to a radio signal, and transmits the radio signal through antenna 462.

Thus, communication terminal apparatus 400 measures the SIR of a signal transmitted from base station apparatus 450 to judge the transmit power control, and transmits an instruction on the transmit power control to base station apparatus 450. Then, according to the instruction on the transmit power control transmitted from communication terminal apparatus 400, base station apparatus 450 changes the transmit power.

Further, base station apparatus 450 measures the SIR of a signal transmitted from communication terminal apparatus 400 to judge the transmit power control, and transmits an instruction on the transmit power control to communication terminal apparatus 400. Then, according to the instruction on the transmit power control transmitted from base station apparatus 450, communication terminal apparatus 400 changes the transmit power.

Thus, according to communication terminal apparatus 400 and base station apparatus 450 of the second embodiment of the present invention, in the closed-loop transmit power control, it is possible to reduce the variation more than an increase or decrease amount in the transmit power in the vicinity of the required level of the transmit power, by setting a required range from the required level of the received quality, and when the received quality is in the required range, instructing a change opposite to a previously instructed change with respect to the increase or decrease in the transmit power control.

In an apparatus of the communication partner, the above processing is performed in the same way, whereby the transmit power control information to be transmitted and a transmit power level of a signal to be transmitted are determined.

In addition, while this embodiment describes about a communication terminal apparatus and/or base station apparatus, the present invention is not limited to those, and any communication apparatuses are applicable that control transmit power of a communication partner from a received quality of a signal transmitted from the communication partner.

Further, while the embodiments of the present invention explain a case that the SIR of a received signal is compared with the required SIR, the present invention is not limited to the above case, and any values are applicable that are indicative of a received quality.

The transmit power control apparatus in the CDMA radio communication as described above is capable of reducing a variation in the measured SIR value in the vicinity of the required SIR value due to a delay in control time. As a result, the apparatus is capable of properly controlling the transmit power level to an extent enabling a predetermined received quality to be maintained and further of decreasing the interference in other users.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalence of such meets and bounds are therefore intended to embraced by the claims.

The present invention is not limited to the above described embodiments, and various variations and modifications may be possible without departing from the scope of the present invention.

This application is based on the Japanese Patent Application No.2000-057195 filed on March 2, 2000, entire content of which is expressly incorporated by reference herein.

## Claims

1. A radio communication apparatus comprising:
measuring means (103) for measuring a received quality of a signal transmitted from a communication partner;
instructing means (105,106) for performing an instruction for changing transmit power to said communication partner from a result obtained by comparing the received quality of the signal with a required received quality;
storage means (107) for storing the instruction for changing transmit power; and
transmitting means (109) for transmitting the instruction for changing transmit power to said communication partner,
wherein said instructing means provides a value of the required received quality with a range allowing a change in the transmit power caused by a propagation delay of a transmit power control signal to perform the instruction for changing the transmit power.

2. The radio communication apparatus according to claim 1, wherein said instructing means (105,106) performs the instruction for decreasing the transmit power to said communication partner when the received quality of the signal is higher than an upper limit of a predetermined range, further performs the instruction for increasing the transmit power to said communication partner when the received quality of the signal is lower than a lower limit of the predetermined range, and refers to a previous instruction for changing the transmit power stored in said storage means (107) to perform the instruction for changing the transmit power so as to maintain the received quality of the signal in the predetermined range when the received quality of the signal is in the predetermined range.

3. The radio communication apparatus according to claim 2, wherein said instructing means (105,106) refers to the previous instruction for changing the transmit power stored in said storage means (107) when the received quality of the signal is in the predetermined range, and when a last instruction for changing transmit power is indicative of increasing the transmit power, generates the instruction for decreasing the transmit power, while when the last instruction for changing transmit power is indicative of decreasing the transmit power, generating the instruction for increasing the transmit power.

4. The radio communication apparatus according to claim 3, further comprising:
setting means (104) for setting the predetermined range with a predetermined variation range from the required received quality.

5. The radio communication apparatus according to claim 1, wherein said instructing means (105,106) changes the range into an arbitrary range at an arbitrary timing.

6. The radio communication apparatus according to claim 1, wherein when the required received quality is changed, said instructing means (105,106) performs the instruction for decreasing the transmit power when the received quality of the signal is higher than the required received quality, while performing the instruction for increasing the transmit power when the received quality of the signal is lower than the required received quality, not depending on whether the received quality of the signal is in the range during one or a plurality of measuring periods immediately after changing the received quality.

7. A mobile station apparatus having a radio communication apparatus, said radio communication apparatus comprising:
measuring means (103) for measuring a received quality of a signal transmitted from a communication partner;
instructing means (105,106) for generating an instruction for changing transmit power to said communication partner from a result obtained by comparing the received quality of the signal with a required received quality;
storage means (107) for storing the instruction for changing transmit power; and
transmitting means (109) for transmitting the instruction for changing transmit power to said communication partner,
wherein said instructing means performs the instruction for decreasing the transmit power to said communication partner when the received quality of the signal is higher than an upper limit of a predetermined range, further performs the instruction for increasing the transmit power to said communication partner when the received quality of the signal is lower than a lower limit of the predetermined range, and refers to a previous instruction for changing the transmit power stored in said storage means to perform the instruction for changing the transmit power so as to maintain the received quality of the signal in the predetermined range when the received quality of the signal is in the predetermined range.

8. A base station apparatus having a radio communication apparatus, said radio communication apparatus comprising:
measuring means (103) for measuring a received quality of a signal transmitted from a communication partner;
instructing means (105,106) for generating an instruction for changing transmit power to said communication partner from a result obtained by comparing the received quality of the signal with a required received quality;
storage means (107) for storing the instruction for changing transmit power; and
transmitting means (109) for transmitting the instruction for changing transmit power to said communication partner,
wherein said instructing means performs the instruction for decreasing the transmit power to said communication partner when the received quality of the signal is higher than an upper limit of a predetermined range, further performs the instruction for increasing the transmit power to said communication partner when the received quality of the signal is lower than a lower limit of the predetermined range, and refers to a previous instruction for changing the transmit power stored in said storage means to perform the instruction for changing the transmit power so as to maintain the received quality of the signal in the predetermined range when the received quality of the signal is in the predetermined range.

9. A transmit power control method, comprising:
measuring a received quality of a signal transmitted from a communication partner;
comparing the received quality of the signal with a required received quality, and based on the compared result, performing an instruction for changing transmit power to said communication partner
storing the instruction for changing transmit power; and
transmitting the instruction for decreasing the transmit power to said communication partner when the received quality of the signal is higher than an upper limit of a predetermined range, further transmitting the instruction for increasing the transmit power to said communication partner when the received quality of the signal is lower than a lower limit of the predetermined range, and referring to a stored previous instruction for changing the transmit power to transmit the instruction for changing the transmit power such that the received quality of the signal is maintained in the predetermined range to said communication partner when the received quality of the signal is in the predetermined range.
